# EUROPEAN PATENT SPECIFICATION

(11) **EP 2 995 203 B1**
(45) Date of publication and mention of the grant of the patent: **25.07.2018**
(21) Application number: 15182101.4
(22) Date of filing: 24.08.2015
(51) Int. Cl.: A23L 15/00, A23L 35/00, A23L 3/015, A23D 7/00, A23D 7/005, A23D 7/01

(54) **EGG SPREAD AND METHOD FOR PRODUCING IT**
EIAUFSTRICH UND VERFAHREN ZUR HERSTELLUNG DAVON
PÂTE À TARTINER À BASE D'OEUFS ET SON PROCÉDÉ DE PRODUCTION

(30) Priority: 26.08.2014 FI 20145739
(43) Date of publication of application: 16.03.2016
(73) Proprietor: Munax Oy, 23800 Laitila (FI)
(72) Inventor: Torikka, Janne, 23800 Laitila (FI); Mäkelä, Emma, 23800 Laitila (FI)
(74) Representative: Kolster Oy Ab

(56) References cited:
- WO-A1-2006/012085
- JP-A- 2007 097 489
- JP-A- 2008 125 392
- US-A- 5 614 244
- US-A1- 2009 304 863

## Description

### FIELD OF THE INVENTION

The present invention generally relates to the field of egg products. More particularly the invention relates to a process for the production of an egg product that is usable in particular as a spread. Furthermore the invention relates to an egg spread that has smooth texture and in addition has an extended shelf life.

### BACKGROUND OF THE INVENTION

Eggs have significant protein, vitamin and mineral content and relatively low saturated fat content. Furthermore eggs have a low energy density, approximately 75 kcal per medium-sized egg, and are a valuable component in a healthy diet. Eggs supply all essential amino acids for humans and provide several vitamins and minerals, including vitamin A, riboflavin (vitamin B₂), folic acid (vitamin B₉), vitamin B₆, vitamin B12, choline, iron, calcium, phosphorus and potassium. Eggs are an important source of high quality protein with high digestibility. The protein quality of egg (protein digestibility corrected amino acid score; biological value; net protein utilization; protein efficiency ratio; protein digestibility) ranks consistently high, even against other high quality sources of protein such as beef and cows' milk [Layman KL, Rodriguez NR. Egg protein as a source of power, strength and energy, Nutrition Today, 44, 1, 2009].

Eggs are common food and one of the most versatile ingredients used in cooking. One of the most popular innovations in Finnish cuisine is egg butter. This rich and creamy spread is commonly served with pastries. In Finland, egg butter is typically spread over heated Karelian pastries before eating. In Estonia, egg butter and dark rye bread are traditionally included in the Easter Sunday meal.

Egg butter may be made by combining only the yolks from the hard-boiled eggs with whipped butter to form a spread. Although some traditional home recipes do not use the egg white, most current recipes do add them usually in a form of cooked whole eggs. When the whites of the eggs are added, they are finely diced so they will mix as well as possible. The reason that the egg whites are not always added is that they never fully mix with the yolks and the butter, and the spread then may appear lumpy and not smooth and creamy. Obviously, development of an egg spread which has conformity and spreadability would be highly desirable for consumers.

Egg butter is traditionally made by blending fresh cooked and sliced eggs and butter thus having microbiological shelf life for only few days. An egg butter having a longer refrigerated shelf life would be desired.

Also egg spreads or egg salads different from the traditional egg butter are available. Typically, such egg products contain oil-in-water emulsions, such as mayonnaise, prepared from vegetable oils. For example, JP 2007097489 discloses a method for preparing an egg salad, wherein cooked and partly solidified egg whites are cut into dices, and mixed with hard-boiled and diced egg yolk material, which are further mixed with mayonnaise (prepared from vegetable oil, egg yolk and vinegar) and salt; whereas JP 2008125392 discloses an egg salad kit which is preservable for a long period and contains separately prepared and packed i) heat coagulated egg yolk and oil-in-water emulsifying seasoning, and ii) heat coagulated egg white. US 2009/0304863, in turn, discloses an egg spread containing vegetable oil and egg yolk (as mayonnaise), and cooked and boiled eggs. None of these egg products contain solid fat.

Presently, the most conventional and widely used technique for inactivating micro-organisms is thermal processing. Thermal processing methods, such as pasteurization and sterilization methods, are commonly used to extend the shelf life of food products. Although conventional thermal sterilization methods are quite effective for inactivating a wide range of both vegetative and non-vegetative forms of micro-organisms on many types of products, there are several disadvantages. For example, thermal sterilization often affects the natural taste, colour and/or texture of many products. For certain egg products thermal sterilization may not be applicable at all due to coagulation. Moreover, thermal process cannot be applied to several fat containing food products due to the loss of the consistence of the food during the process.

Egg products may be pasteurized by heat treatment to reduce the number of harmful bacteria. In some instances it is also possible to treat fresh egg material without coagulating the egg e.g. by exposing the egg material to electromagnetic radiation or high frequency radio waves.

High pressure processing (HPP) methods have been widely investigated and reported due to their efficacy for reducing the risk of microbial spoilage of foodstuffs and thereby extending the period for which foodstuffs can practically be stored. A method for inactivating microorganisms in a product using high pressure processing (HPP) is disclosed e.g. in US6635223 B2. The method involves the steps of packing the product in a flexible container, heating the product to a pre-pressurized temperature, subjecting the product to a pressure at a pressurized temperature for a time period; and reducing the pressure after that time period. The method may also further comprise an additional step of subjecting the product to a predetermined amount of oxygen for a time interval. US20080311259 involves a method and an apparatus for using high pressure to ensure microorganism inactivation in liquid products, and in particular liquid egg products. WO2006012085 discloses a method of extending shelf life of egg products with high pressure treatment.

### BRIEF DESCRIPTION OF THE INVENTION

An object of the present invention is to provide an egg product which may have both an extended refrigerated shelf life and pleasant consistence, and spreadability. The objects of the invention are achieved by a method and product which are characterized by what is stated in the independent claims. The preferred embodiments of the invention are disclosed in the dependent claims.

The invention is based on the idea of preparing an egg spread from a separate egg yolk and egg white material so that one part of egg yolk material is frozen and thawed and mixed with the solid fat component after which the cooked egg white material and the cooked egg yolk material are all mixed together. The invention is based on the realization that egg yolk due to its emulsifying properties specifically affects the butter consistence which later is preserved in the end product. In addition, using separate egg materials (white and yolk mass) instead of cooked eggs allows the producer to better optimize the sensory quality of the end product.

The present preparation method provides an egg spread that is easily spreadable when taken from refrigerated temperatures as compared to the traditionally made egg butter, but advantageously has a composition similar to that of traditional egg butter. Moreover, the product of the invention is ready to eat without additional cooking or other food preparation. The product of the invention may be utilized as a nutritive preparation, as a spread on bread, as dressing in salads or as basic or accompanying foodstuff. The product obtained by the method of the present invention has an extended shelf life as determined by bacteria population density in the product and/or organoleptic properties.

### DETAILED DESCRIPTION OF THE INVENTION

The present invention relates to a method for producing an egg spread and the egg spread obtained by the method. A spread is a food that is literally spread, generally with a knife, onto bread or other food products. Spreads are added to food to provide flavor and texture and selected nutrients.

The method comprises steps of providing pasteurized liquid egg yolk material prepared by thawing frozen egg yolk material; providing a solid fat component; mixing said egg yolk material and said solid fat to make softened fat blend; providing pasteurized liquid egg white material and cooking it followed by cooling; providing pasteurized liquid egg yolk material, cooking and cooling and optionally slicing it; mixing cooked egg materials with the softened fat blend in a food cutter or a blender; packing the product into a flexible and sealable package; and pressurizing the packaged product with high pressure processing (HPP). The product is stored refrigerated until use.

The liquid egg yolk material means egg yolk obtained after separating the yolk and the white by breaking fresh eggs, and as such, the liquid egg yolk is substantially free of egg white. Pasta type liquid egg yolk material prepared by thawing frozen egg yolk material means that fresh egg yolk has been packed and frozen according to the industrial practice, typically at -18 to -24°C after which the material has been thawed in cold room below 6°C.

The liquid egg white material means egg white obtained after separating the yolk and the white by breaking fresh eggs, and as such, the liquid egg white is substantially free of egg yolk.

The liquid egg yolk material and liquid egg white material are pasteurized by any suitable means according to the industrial practice. For example, the egg material may be pasteurized by heat treating the egg material to temperatures of about 60 - 70°C for 3 - 5 min. Preferably the pasteurization is done at about 62°C for about 3 min. The egg material may also be pasteurized by processes other than heating the egg material, for example by exposing the egg material to electromagnetic radiation, such as infrared or gamma irradiation or high frequency radio waves. The egg material may also be non-pasteurized. Before or after pasteurization any suitable antimicrobial agent or microbicide may be added to the egg material. Preferably, the egg material is treated in a manner sufficient to pasteurize the material without coagulating the egg. The egg material may also be pasteurized as part of the cooking.

The liquid egg materials are packed before cooking, for example in a sealable flexible plastic material like a plastic bag or any suitable food grade material. Cooking is done according to the industrial practice, typically at about 92°C for about 20 min and 10min for egg white and egg yolk, respectively. This results in hard-boiled egg material.

The frozen and thawed egg yolk material is mixed with a solid fat component to make softened fat-egg yolk blend. As used herein, the fat component means butter, vegetable fat or their blend. A solid fat is used, most preferably butter. The fat component is mixed with egg yolk material optimally in a ratio 2:1, however the blend may contain 30 - 50% fat and 10 - 40% frozen and thawed egg yolk material from the total mass of fat-egg yolk blend. The amount of the egg yolk material is adjusted according to the solidity of the fat component. Preferably the final spread has about 40% butter, vegetable fat, or their blend. The frozen and thawed egg yolk alters the texture of the butter so that the mixture becomes easily spreadable and tempers at a faster rate when taken from refrigerator to room temperature as compared to plain butter. In this context, butter means the common dairy product that is made by churning fresh or fermented cream or milk. Preferably the butter made from cows' milk is used, but butter from the milk of other mammals, including for example sheep, goats, buffalo, and yaks may be also utilized. Vegetable fat can be any fat or oil that has a plant origin rather than an animal origin. Fat blends can be any fat-containing product like margarines, blends of butter and vegetable fat, spreads and spreadable cheeses which consist of a liquid oil fraction and a so-called hardstock. The liquid oil fraction typically comprises liquid unmodified vegetable oils such as olive oil, soybean oil, sunflower oil, rapeseed oil, corn oil and blends of vegetable oils. Hardstock typically comprises a blend of fats that are solid at room temperature. The fat component of the egg spread may also be a cheese, preferably processed cheese or soft cheese.

The cooked egg yolk and egg white materials are chopped and mixed with the softened fat-egg yolk blend to obtain the egg spread, which has a texture resembling the traditional egg butter. Preferably this is done in a food cutter or a blender. The ratio of egg white material to egg yolk material in the final spread is optimally about 50:50, however this may vary depending the amount of added cooked egg yolk material. In one embodiment the spread contains about 20% frozen and thawed egg yolk material and about 10% cooked egg yolk material. In another embodiment the spread contains frozen and thawed egg yolk and cooked egg white, but not cooked egg yolk. The spread without cooked egg yolk material has a ratio of egg white to egg yolk about 30:20. Any flavor, additives, such as salt, seasoning or additional food particulates like ham cubes may be mixed to the blend in a cutter. These components in part may also be added to the egg white material and/or egg yolk material already before its cooking. The egg spread may include one or more antimicrobial agents and/or acidifying agents, but preferably it does not.

The egg spread is packed and the product is preferably treated by high pressure processing (HPP), but it may also be untreated. HPP is a food processing method where food products are exposed to elevated pressures, in the presence or absence of heat, to inactivate microorganisms. HPP is also known as high hydrostatic pressure processing (HPP) and ultra high-pressure processing (UHP).

In the present invention non-thermal HPP is used. Non-thermal HPP means that heat treatment is not done in the HPP process, i.e. HPP treatment is done at a refrigerated temperature (at +2-+6 °C) or at room temperature or ambient temperature. This non-thermal HPP processing extends the shelf life of the egg based product without detrimentally altering the organoleptic and nutritional properties of the product. Non-thermal HPP eliminates thermal degradation, and allows for the preservation of 'fresh' characteristics of the egg product. The high pressure processing is typically performed at 250 - 700 MPa for 2 - 10 minutes. The refrigerated shelf life for over 4 days up to at least 30 days can be obtained for the product after the HPP processing. The obtained egg spread maintains acceptable organoleptic properties for over 4 weeks. As used herein, the refrigerated shelf life means the length of time that an egg-product may be stored at a refrigerated temperature without becoming unfit for use, consumption, or sale. Shelf life is the recommended maximum time for which an egg product can be stored, during which the defined quality of a product remains acceptable under expected storage conditions.

The present invention further relates to an egg spread or similar product comprising fat; frozen and thawed egg yolk material; cooked egg white material; cooked egg yolk material; and optionally additives, flavour, seasoning or food particulates.

The fat in the egg spread is butter, vegetable fat or their blend. A solid fat is used, most preferably butter. The egg spread of the invention contains about 30 - 50% fat, about 20% frozen and thawed pasteurized egg yolk material, about 30% cooked pasteurized egg white material; about 10% cooked pasteurized egg yolk material; and about 1% additives. (The potential addition of food particulates has not included into the percentage values.) Preferably the egg spread contains 40% of fat, 20% frozen and thawed pasteurized egg yolk material, 30% cooked pasteurized egg white material, 10% cooked pasteurized egg yolk material; and about 1% added salt upon consumer acceptance. The egg spread preferably has the ratio of the cooked egg white material to egg yolk material between 25:35 and 40:20 and the amount of frozen and thawed egg yolk material between 20 to 40% of the total amount of softened fat blend. In one embodiment the spread does not contain the cooked egg yolk material.

The egg spread of the invention may be prepared by the method of the present invention. The egg spread may also be prepared without utilizing the HPP process, but then the refrigerated shelf life is expected to be shorter.

The invention further relates to a packaged egg spread, wherein the egg spread is packed into a sealable and flexible material, such as plastic, eg. a plastic bag. The packaged product is treated with a high pressure process and the product is having refrigerated shelf life for over 4 days up to at least 30 days.

### EXAMPLES

### Preparing egg butter

About 24 hours before production 250 grams of frozen, pasteurized egg yolk mass is transferred to a refrigerator (+6°C) for thawing.

Pasteurized egg white mass is weighed and 3.0 grams salt is mixed with 375 grams of egg white mass. The mixture is packed in a plastic casing and cooked in a water bath for 20 min. Similarly 122 grams pasteurized egg yolk mass is packed and cooked for 8 min. The cooked egg products are quickly cooled down under cold tap water and transferred to a refrigerator (+6°C) until used.

500 grams non-lactose butter and 250 grams of frozen and thawed egg yolk are blended in a cutter for at least 5 min to produce a homogenous blend. Then 122 grams of cooked egg yolk is cut into small pieces with knife and is added to the butter-yolk blend. Blending is continued in a cutter until the egg yolk is evenly spread into the mixture. Finally the cooked egg white (378 grams) is cautiously blended into the mixture.

The product prepared above is packed into a flexible plastic package which then is carefully sealed. The sealed packages are pressurized (600 MPa, 5 min), labeled and stored in a cold room/ refrigerator (+6°C) until used. For shelf life testing unopened packages are periodically taken for microbiological and sensory analyses.

### Shelf life testing of the final egg product

During the shelf life testing three end product packages at a time were taken from cold storage (+6°C) and delivered to an accredited laboratory for immediate analysis. At the laboratory the whole sample was homogenized and the dilutions were prepared according to the good laboratory practices.

Total plate count (or total aerobic microbes) was measured according to NMKL 86/2006 method and are expressed as cfu/g. In this method the Petri dishes were prepared from Plate Count Agar (e.g. Oxoid (CM0325)) and the dilutions were made from the egg product sample. The incubation was conducted at 30 ± 1°C for 72 ±3 hours. Samples were made in triplicates and the values received were averaged.

There are no microbial number limits set for individual food products in the food legislation but in the industry the alarming level is often set for 100 000 cfu/g and the rejection limit for 500 000 cfu/g.

### Organoleptics

Organoleptic evaluations were made by an internal professional team with special attention to smell, flavor and taste as well as the structural properties.
a = acceptable, u = unacceptable

The results are shown in Table1.

| Egg spread, pressurized for 5 minutes | | |
|---|---|---|
| Storage period | TPC | Organoleptics |
| Initial (week 0) | 20 | a |
| Week 2 | 5000 | a |
| Week 4 | 5466 | a |
| Week 6 | 101 000 | u |

## Claims

1. A method for producing an egg spread, **characterized in that** it comprises steps of:
providing pasteurized liquid egg yolk material prepared by thawing frozen egg yolk;
providing solid fat component;
mixing said egg yolk material and said fat component to provide a fat blend;
providing pasteurized liquid egg white material, cooking and cooling it;
providing pasteurized liquid egg yolk material, cooking and cooling it;
chopping and mixing the cooked egg materials with the fat blend;
packing the product; and optionally
pressurizing the packed product with high pressure processing (HPP).

2. The method of claim 1, **characterized in that** the liquid egg yolk is cut after cooking and cooling.

3. The method of claim 1 or 2, **characterized in that** the solid fat is butter, vegetable fat, a blend of them, or a cheese product.

4. The method of any one of claims 1 to 3, **characterized in that** the fat blend contains 30 - 50% fat and 10 - 40% frozen and thawed egg yolk material from the total mass of fat-egg yolk blend.

5. The method of any one of the previous claims, **characterized in that** about 30% of cooked egg white material and about 10% cooked egg yolk material are mixed with the fat blend.

6. The method of any one of the previous claims, **characterized in that** the cooked egg materials are mixed with the fat blend in a cutter or blender.

7. The method of any one of the previous claims, **characterized in that** flavour, additives, seasoning or solid food particulates is mixed to the egg white and/or egg yolk material.

8. The method of any one of the previous claims, **characterized in that** non-thermal high pressure processing is performed at 250 - 700 MPa for 2 - 10 minutes.

9. An egg spread, **characterised in that** it contains
solid fat;
frozen and thawed pasteurized egg yolk material;
cooked pasteurized egg white material;
cooked pasteurized egg yolk material;
and optionally additives, flavour, seasoning or solid food particulates.

10. The egg spread of claim 9, **characterized in that** it contains 30 - 50% fat, 20% frozen and thawed pasteurized egg yolk material, 30% cooked pasteurized egg white material; 10% cooked pasteurized egg yolk material; and 1% additives including added salt.

11. The egg spread of claims 9 or 10, **characterized in that** it contains 40% fat, 20% frozen and thawed pasteurized egg yolk material, 30% cooked pasteurized egg white material and 10% cooked pasteurized egg yolk material.

12. The egg spread of any one of claims 9 to 11, **characterized in that** it has the ratio of the cooked egg white material to egg yolk material between 25:35 and 40:20 and the amount of frozen and thawed egg yolk material between 20 to 40% of the total amount of fat - frozen and thawed egg yolk material blend.

13. The egg spread of claims 9 to 12, **characterized in that** the fat is butter, vegetable fat, a blend of them or a cheese product.

14. The egg spread of claim 13, **characterized in that** it the fat is butter.

15. A packaged egg spread within a sealed package; **characterized in that** it comprises the egg spread of any one claims 9 to 14, wherein the packaged product is treated with high pressure processing (HPP) and the packaged egg spread is having shelf life in cold room temperatures (below +6°C) for over 4 days up to at least 30 days.

## Patentansprüche

1. Verfahren zum Erzeugen eines Eiaufstrichs, **dadurch gekennzeichnet, dass** es folgende Schritte umfasst:
Bereitstellen eines pasteurisierten Flüssigeigelbmaterials, das durch Auftauen von gefrorenem Eigelb zubereitet wird;
Bereitstellen einer Festfettkomponente;
Mischen des Eigelbmaterials und der Fettkomponente, um eine Fettmischung bereitzustellen;
Bereitstellen eines pasteurisierten Flüssigeiweißmaterials, Kochen und Kühlen desselben;
Bereitstellen eines pasteurisierten Flüssigeigelbmaterials, Kochen und Kühlen desselben;
Zerkleinern der gekochten Eimaterialen und Mischen mit der Fettmischung;
Verpacken des Produkts; und wahlweise
unter Druck setzen des verpackten Produkts mit Hochdruckverarbeitung (HPP).

2. Verfahren nach Anspruch 1, **dadurch gekennzeichnet, dass** das Flüssigeigelb nach dem Kochen und Kühlen zerschnitten wird.

3. Verfahren nach Anspruch 1 oder 2, **dadurch gekennzeichnet, dass** das Festfett Butter, pflanzliches Fett, eine Mischung davon oder ein Käseerzeugnis ist.

4. Verfahren nach einem der Ansprüche 1 bis 3, **dadurch gekennzeichnet, dass** die Fettmischung 30 bis 50 % Fett und 10 bis 40 % gefrorenes und aufgetautes Eigelbmaterial von der Gesamtmasse der Fett-Eigelb-Mischung enthält.

5. Verfahren nach einem der vorhergehenden Ansprüche, **dadurch gekennzeichnet, dass** ungefähr 30 % des gekochten Eiweißmaterials und ungefähr 10 % des gekochten Eigelbmaterials mit der Fettmischung gemischt werden.

6. Verfahren nach einem der vorhergehenden Ansprüche, **dadurch gekennzeichnet, dass** die gekochten Eimaterialen mit der Fettmischung in einer Schneidvorrichtung oder einem Mixer gemischt werden.

7. Verfahren nach einem der vorhergehenden Ansprüche, **dadurch gekennzeichnet, dass** Geschmack, Zusatzstoffe, Würzmittel oder feste Lebensmittelteilchen mit dem Eiweiß- und/oder Eigelbmaterial gemischt werden.

8. Verfahren nach einem der vorhergehenden Ansprüche, **dadurch gekennzeichnet, dass** eine nicht thermische Hochdruckverarbeitung bei 250 bis 700 MPa 2 bis 10 Minuten lang ausgeführt wird.

9. Eiaufstrich, **dadurch gekennzeichnet, dass** er Folgendes enthält:
Festfett;
gefrorenes und aufgetautes pasteurisiertes Eigelbmaterial;
gekochtes pasteurisiertes Eiweißmaterial;
gekochtes pasteurisiertes Eigelbmaterial;
und wahlweise Zusatzstoffe, Geschmack, Würzmittel oder feste Lebensmittelteilchen.

10. Eiaufstrich nach Anspruch 9, **dadurch gekennzeichnet, dass** er 30 bis 50 % Fett, 20 % gefrorenes und aufgetautes pasteurisiertes Eigelbmaterial, 30 % gekochtes pasteurisiertes Eiweißmaterial; 10 % gekochtes pasteurisiertes Eigelbmaterial; und 1 % Zusatzstoffe einschließlich hinzugefügtes Salz enthält.

11. Eiaufstrich nach Anspruch 9 oder 10, **dadurch gekennzeichnet, dass** er 40 % Fett, 20 % gefrorenes und aufgetautes pasteurisiertes Eigelbmaterial, 30 % gekochtes pasteurisiertes Eiweißmaterial und 10 % gekochtes pasteurisiertes Eigelbmaterial enthält.

12. Eiaufstrich nach einem der Ansprüche 9 bis 11, **dadurch gekennzeichnet, dass** er das Verhältnis des gekochten Eiweißmaterials zu dem Eigelbmaterial zwischen 25:35 und 40:20 und die Menge des gefrorenen und aufgetauten Eigelbmaterials zwischen 20 bis 40 % der Gesamtmasse der Mischung aus Fett und aufgetautem Eigelbmaterial aufweist.

13. Eiaufstrich nach Anspruch 9 bis 12, **dadurch gekennzeichnet, dass** das Fett Butter, pflanzliches Fett, eine Mischung davon oder ein Käseerzeugnis ist.

14. Eiaufstrich nach Anspruch 13, **dadurch gekennzeichnet, dass** das Fett Butter ist.

15. Verpackter Eiaufstrich in einer versiegelten Verpackung; **dadurch gekennzeichnet, dass** er den Eiaufstrich nach einem der Ansprüche 9 bis 14 umfasst, wobei das verpackte Erzeugnis mit Hochdruckverarbeitung (HPP) behandelt wird und der verpackte Eiaufstrich eine Haltbarkeit bei Kühlraumtemperaturen (unter +6 °C) von mehr als 4 Tagen bis zu mindestens 30 Tagen aufweist.

## Revendications

1. Procédé de fabrication d'une pâte à tartiner à base d'oeuf, **caractérisé en ce qu'**il comprend les étapes suivantes :
fourniture d'une matière pasteurisée liquide à base de jaune d'oeuf préparée par décongélation de jaune d'oeuf congelé ;
fourniture d'un composant gras solide ;
mélange de ladite matière à base de jaune d'oeuf et dudit composant gras pour fournir un mélange gras ;
fourniture d'une matière pasteurisée liquide à base de blanc d'oeuf, cuisson et refroidissement de celle-ci ;
fourniture d'une matière pasteurisée liquide à base de jaune d'oeuf, cuisson et refroidissement de celle-ci ;
hachage des matières cuites à base d'oeuf et mélange de celles-ci avec le mélange gras ;
emballage du produit ; et éventuellement
mise sous pression du produit emballé avec un traitement à haute pression (HPP).

2. Procédé selon la revendication 1, **caractérisé en ce que** le jaune d'oeuf liquide est découpé après cuisson et refroidissement.

3. Procédé selon la revendication 1 ou 2, **caractérisé en ce que** la matière grasse solide est du beurre, de la graisse végétale, un mélange de ceux-ci, ou un produit fromager.

4. Procédé selon l'une quelconque des revendications 1 à 3, **caractérisé en ce que** le mélange gras contient de 30 à 50 % de matière grasse et de 10 à 40 % de matière congelée et décongelée à base de jaune d'oeuf par rapport à la masse totale de mélange matière grasse-jaune d'oeuf.

5. Procédé selon l'une quelconque des revendications précédentes, **caractérisé en ce qu'**environ 30 % de matière cuite à base de blanc d'oeuf et environ 10 % de matière cuite à base de jaune d'oeuf sont mélangés avec le mélange gras.

6. Procédé selon l'une quelconque des revendications précédentes, **caractérisé en ce que** les matières cuites à base d'oeuf sont mélangées avec le mélange gras dans un hachoir ou un mélangeur.

7. Procédé selon l'une quelconque des revendications précédentes, **caractérisé en ce qu'**un arôme, des additifs, un assaisonnement ou des particules d'aliments solides sont mélangés à la matière à base de blanc d'oeuf et/ou de jaune d'oeuf.

8. Procédé selon l'une quelconque des revendications précédentes, **caractérisé en ce qu'**un traitement à haute pression non thermique est effectué à 250 à 700 MPa pendant 2 à 10 minutes.

9. Pâte à tartiner à base d'oeuf, **caractérisée en ce qu'**elle contient
une matière grasse solide ;
une matière pasteurisée congelée et décongelée à base de jaune d'oeuf ;
une matière pasteurisée cuite à base de blanc d'oeuf ;
une matière pasteurisée cuite à base de jaune d'oeuf ;
et éventuellement des additifs, un arôme, un assaisonnement ou des particules d'aliments solides.

10. Pâte à tartiner à base d'oeuf selon la revendication 9, **caractérisée en ce qu'**elle contient de 30 à 50 % de matière grasse, 20 % de matière pasteurisée congelée et décongelée à base de jaune d'oeuf, 30 % de matière pasteurisée cuite à base de blanc d'oeuf ; 10 % de matière pasteurisée cuite à base de jaune d'oeuf ; et 1 % d'additifs comprenant du sel ajouté.

11. Pâte à tartiner à base d'oeuf selon les revendications 9 ou 10, **caractérisée en ce qu'**elle contient 40 % de matière grasse, 20 % de matière pasteurisée congelée et décongelée à base de jaune d'oeuf, 30 % de matière pasteurisée cuite à base de blanc d'oeuf et 10 % de matière pasteurisée cuite à base de jaune d'oeuf.

12. Pâte à tartiner à base d'oeuf selon l'une quelconque des revendications 9 à 11, **caractérisée en ce qu'**elle présente un rapport de la matière cuite à base de blanc d'oeuf à la matière à base de jaune d'oeuf compris entre 25:35 et 40:20 et une quantité de matière congelée et décongelée à base de jaune d'oeuf comprise entre 20 et 40 % de la quantité totale de mélange matière grasse-matière congelée et décongelée à base de jaune d'oeuf.

13. Pâte à tartiner à base d'oeuf selon les revendications 9 à 12, **caractérisée en ce que** la matière grasse est du beurre, de la graisse végétale, un mélange de ceux-ci, ou un produit fromager.

14. Pâte à tartiner à base d'oeuf selon la revendication 13, **caractérisée en ce que** la matière grasse est du beurre.

15. Pâte à tartiner à base d'oeuf conditionnée à l'intérieur d'un emballage scellé ; **caractérisée en ce qu'**elle comprend la pâte à tartiner à base d'oeuf selon l'une quelconque des revendications 9 à 14, dans laquelle le produit conditionné est soumis à un traitement à haute pression (HPP) et la pâte à tartiner conditionnée a une durée de conservation à des températures de chambre froide (inférieures à +6 °C) pendant plus de 4 jours jusqu'à au moins 30 jours.
